(19)

Europäisches
Patentamt
European
Patent Office
Office européen
des brevets

(11) **EP 3 118 241 A1**

(12) **EUROPEAN PATENT APPLICATION**

(43) Date of publication:
**18.01.2017 Bulletin 2017/03**

(51) Int Cl.:
***C08G 73/02*** *(2006.01)* ***C10G 33/04*** *(2006.01)*

(21) Application number: **15177066.6**

(22) Date of filing: **16.07.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **BASF SE**
**67056 Ludwigshafen am Rhein (DE)**

(72) Inventors:
• **Hueffer, Stephan**
  **67063 Ludwigshafen (DE)**
• **Garcia Marcos, Alejandra**
  **67063 Ludwigshafen (DE)**
• **Reis-Walther, Eva-Maria**
  **64747 Breuberg (DE)**

(74) Representative: **BASF IP Association**
**BASF SE**
**ZRX-C6**
**67056 Ludwigshafen (DE)**

(54) **POLYMERS, METHOD TO MAKE SUCH POLYMERS, AND USES THEREOF**

(57) The present invention is directed towards polymers bearing the following structural elements per molecule:

(A) an average of at least two alkoxylated (poly)alkylenimine units, said alkylene being selected from $C_2$-$C_{10}$-alkylene and said alkoxylation being selected from ethoxylation, propoxylation, butoxylation and combinations of at least two of the foregoing,

(B) at least one linkage connecting at least two different alkoxylated (poly)alkylenimine units (A), each linkage (B) being selected from organic spacers bearing in the range of from 4 to 30 carbon atoms.

**Description**

The present invention is directed towards polymers bearing the following structural elements per molecule:

(A) an average of at least two alkoxylated (poly)alkylenimine units, said alkylene being selected from $C_2$-$C_{10}$-alkylene and said alkoxylation being selected from ethoxylation, propoxylation, butoxylation and combinations of at least two of the foregoing,
(B) at least one linkage connecting at least two different alkoxylated (poly)alkylenimine units (A), each linkage (B) being selected from organic spacers bearing in the range of from 4 to 30 carbon atoms.

Furthermore, the present invention is directed towards a process to manufacture inventive polymers, and to applications of inventive polymers.

Crude oil demulsification is a process that has found ongoing interest. Crude oil is usually furnished as an emulsion - water in oil - that needs removal of the water before further processing such as, but not limited to distillation or fractionation, reforming and platforming. Remainder of water may lead to corrosion during fractionating and to irregularities.

The first step of processing of such crude oil emulsions is demulsifying - also called emulsion breaking in the context of the present invention. It is desired that the demulsification step may be performed efficiently. It is therefore required that the step of demulsification does not take too much time, and it should furnish a two-phase mixture that may be separated easily.

Alkoxylated polyethylenimines have found numerous applications such as, but not limited to dispersing pigments, furthermore as demulsifying agents, especially for oil demulsification, see, e. g., US 4,935,162 and US 5,445,765.

Although a couple of demulsifying agents have been developed in the past there is still a need for demulsifying agents that have an altogether superior application profile.

Accordingly, the polymers defined at the outset have been found, hereinafter also referred to as inventive polymers or polymers according to the (present) invention.

In the context of the present invention the terms "(poly)alkylenimine" and "(poly)alkyleneimine units" may be used interchangeably.

Inventive polymers are characterized by structural elements (A) and (B). Structural element (A) includes an average of at least two alkoxylated (poly)alkylenimine units, said alkylene being selected from $C_2$-$C_{10}$-alkylene and said alkoxylation being selected from ethoxylation, propoxylation, butoxylation and combinations of at least two of the foregoing.

In one embodiment of the present invention, said alkylenimine unit is a $C_2$-$C_{10}$-alkylendiamine unit, for example a 1,2-propylendiamine, preferably an $\alpha,\omega$-$C_2$-$C_{10}$-alkylendiamine, for example 1,2-ethylendiamine, 1,3-propylendiamine, 1,4-butylendiamine, 1,5-pentylendiaminne, 1,6-hexandiamine (also being referred to as 1,6-hexylendiamine), 1,8-diamine or 1,10-decandiamine, even more preferred are 1,2-ethylendiamine, 1,3-propylendiamine, 1,4-butylendiamine, and 1,6-hexandiamine.

In another embodiment of the present invention, said alkylenimine unit is a polyalkylenimine unit, preferably a polyethylenimine or polypropylenimine unit.

The term "polyethylenimine" in the context of the present invention does not only refer to polyethylenimine homopolymers but also to polyalkylenimines containing NH-$CH_2$-$CH_2$-NH structural elements together with other alkylene diamine structural elements, for example NH-$CH_2$-$CH_2$-$CH_2$-NH structural elements, NH-$CH_2$-$CH(CH_3)$-NH structural elements, NH-$(CH_2)_4$-NH structural elements, NH-$(CH_2)_6$-NH structural elements or (NH-$(CH_2)_8$-NH structural elements but the NH-$CH_2$-$CH_2$- NH structural elements being in the majority with respect to the molar share. Preferred polyethylenimines contain NH-$CH_2$-$CH_2$-NH structural elements being in the majority with respect to the molar share, for example amounting to 60 mol-% or more, more preferably amounting to at least 70 mol-%, referring to all alkylenimine structural elements. In a special embodiment, the term polyethylenimine refers to those polyalkylenimines that bear only one or zero alkylenimine structural element per polyethylenimine unit that is different from NH-$CH_2$-$CH_2$-NH.

The term "polypropylenimine" in the context of the present invention does not only refer to polypropylenimine homopolymers but also to polyalkylenimines containing NH-$CH_2$-$CH(CH_3)$-NH structural elements together with other alkylene diamine structural elements, for example NH-$CH_2$-$CH_2$-$CH_2$-NH structural elements, NH-$CH_2$-$CH_2$-NH structural elements, NH-$(CH_2)_4$-NH structural elements, NH-$(CH_2)_6$-NH structural elements or (NH-$(CH_2)_8$-NH structural elements but the NH-$CH_2$-$CH(CH_3)$-NH structural elements being in the majority with respect to the molar share. Preferred polypropylenimines contain NH-$CH_2$-$CH(CH_3)$-NH structural elements being in the majority with respect to the molar share, for example amounting to 60 mol-% or more, more preferably amounting to at least 70 mol-%, referring to all alkylenimine structural elements. In a special embodiment, the term polypropylenimine refers to those polyalkylenimines that bear only one or zero alkylenimine structural element per polypropylenimine unit that is different from NH-$CH_2$-$CH(CH_3)$-NH.

Branches may be alkylenamino groups such as, but not limited to -$CH_2$-$CH_2$-$NH_2$ groups or $(CH_2)_3$-$NH_2$-groups.

Longer branches may be, for examples, $-(CH_2)_3-N(CH_2CH_2CH_2NH_2)_2$ or $-(CH_2)_2-N(CH_2CH_2CH_2NH_2)_2$ groups. Highly branched polyethylenimines are, e.g., polyethyleni mine dendrimers or related molecules with a degree of branching in the range from 0.25 to 0.95, preferably in the range from 0.30 to 0.80 and particularly preferably at least 0.5. The degree of branching can be determined for example by $^{13}$C-NMR or $^{15}$N-NMR spectroscopy, preferably in $D_2O$, and is defined as follows:

$$DB = D+T/D+T+L$$

with D (dendritic) corresponding to the fraction of tertiary amino groups, L (linear) corresponding to the fraction of secondary amino groups and T (terminal) corresponding to the fraction of primary amino groups.

Within the context of the present invention, branched polyethylenimine units are polyethylenimine units with DB in the range from 0.25 to 0.95, particularly preferably in the range from 0.30 to 0.90% and very particularly preferably at least 0.5. Preferred polyethylenimine units are those that exhibit little or no branching, thus predominantly linear or linear polyethylenimine units.

In the context of the present invention, $CH_3$-groups are not being considered as branches.

In one embodiment of the present invention polyalkylenimine units have a primary amine value in the range of from 1 to 1000 mg KOH/g, preferably from 10 to 500 mg KOH/g, most preferred from 50 to 300 mg KOH/g. The primary amine value can be determined according to ASTM D2074-07.

In one embodiment of the present invention polyalkylenimine units have a secondary amine value in the range of from 10 to 1000 mg KOH/g, preferably from 50 to 500 mg KOH/g, most preferred from 50 to 500 mg KOH/g. The secondary amine value can be determined according to ASTM D2074-07.

In one embodiment of the present invention polyalkylenimine units have a tertiary amine value in the range of from 1 to 300 mg KOH/g, preferably from 5 to 200 mg KOH/g, most preferred from 10 to 100 mg KOH/g. The tertiary amine value can be determined according to ASTM D2074-07.

In one embodiment of the present invention, the molar share of tertiary N atoms is determined by $^{15}$N-NMR spectroscopy. In cases that tertiary amine value and result according to $^{13}$C-NMR spectroscopy are inconsistent, the results obtained by $^{13}$C-NMR spectroscopy will be given preference.

In one embodiment of the present invention, the average molecular weight $M_w$ of said (poly)alkylenimine unit is in the range of from 250 to 100,000 g/mol, preferably up to 50,000 g/mol and more preferably from 800 up to 25,000 g/mol. The average molecular weight $M_w$ of polyalkylenimine units may be determined by gel permeation chromatography (GPC) of the intermediate respective polyalkylenimine, with 1.5 % by weight aqueous formic acid as eluent and cross-linked poly-hydroxyethyl methacrylate as stationary phase.

Within a respective inventive polymer, (poly)alkylenimine units may be uniform or different, preferably they are uniform. In one embodiment of the present invention, all (poly)alkylenimine units of a specific inventive polymer are 1,2-propylendiamine, preferably an $\alpha,\omega$-$C_2$-$C_{10}$-alkylendiamine, for example 1,2-ethylendiamine, 1,3-propylendiamine, 1,4-butylendiamine, 1,5-pentylendiaminne, 1,6-hexandiamine (also being referred to as 1,6-hexylendiamine), 1,8-diamine or 1,10-decandiamine, even more preferred 1,2-ethylendiamine, 1,3-propylendiamine, 1,4-butylendiamine, or 1,6-hexandiamine.

In one embodiment of the present invention, all (poly)alkylenimine units of a specific inventive polymer are polyethylenimine units with a narrow molecular weight distribution, for example with a polydispersity $Q = M_w/M_n$ in the range of from 1 to 3.

In one embodiment of the present invention, all (poly)alkylenimine units of a specific inventive polymer are polypropylenimine units with a narrow molecular weight distribution, for example with a polydispersity $Q = M_w/M_n$ in the range of from 1 to 3, preferably at least 2.

In one embodiment of the present invention, all (poly)alkylenimine units of a specific inventive polymer are polyethylenimine units with a broad molecular weight distribution, for example with a polydispersity $Q = M_w/M_n$ in the range of from greater than 3 up to 15, preferably 3.5 to 8.

Said (poly)alkylenimine units (A) are alkoxylated, said alkoxylation being selected from ethoxylation, propoxylation, butoxylation and combinations of at least two of the foregoing. Preference is given to ethylene oxide, 1,2-propylene oxide and mixtures of ethylene oxide and 1,2-propylene oxide. If mixtures of at least two alkylene oxides are applied, they can be reacted step-wise or simultaneously.

In one embodiment of the present invention, an alkoxylated polyalkylenimine unit (A) bears at least 6 nitrogen atoms per unit.

In one embodiment of the present invention, (poly)alkylenimine is alkoxylated with 2 to 50 moles of alkylene oxide per NH group, preferably 5 to 30 moles of alkylene oxide per NH group, even more preferred 5 to 25 moles of ethylene oxide or 1,2-propylene oxide or combinations therefrom per NH group. In the context of the present invention, an $NH_2$ unit is counted as two NH groups. Preferably, all - or almost all - NH groups are alkoxylated, and there are no detectable amounts of NH groups left.

Depending on the manufacture of such alkoxylated (poly)alkylenimine unit, the molecular weight distribution may be narrow or broad. For example, the polydispersity $Q = M_w/M_n$ in the range of from 1 to 3, preferably at least 2, or it may be greater than 3 and up to 20, for example 3.5 to 15 and even more preferred in the range of from 4 to 5.5.

In one embodiment of the present invention, the polydispersity Q of polyalkoxylated (poly)alkylenimine (A) is in the range of from 2 to 10.

In one embodiment of the present invention alkoxylated (poly)alkylenimine (A) is selected from poly-ethoxylated polyethylenimine, ethoxylated polypropylenimine, ethoxylated $\alpha,\omega$-hexandiamines, ethoxylated and propoxylated polyethylenimine, ethoxylated and propoxylated polypropylenimine, and ethoxylated and poly-propoxylated $\alpha,\omega$-hexandi-amines.

In one embodiment of the present invention the average molecular weight $M_n$ (number average) of alkoxylated polyethylenimine units (A) is in the range of from 2,500 to 1,500,000 g/mol, determined by GPC, preferably up to 500,000 g/mol.

In one embodiment of the present invention, the average alkoxylated (poly)alkylenimine (A) are selected from ethoxylated $\alpha,\omega$-hexandiamines and ethoxylated and poly-propoxylated $\alpha,\omega$-hexandiamines, each with an average molecular weight $M_n$ (number average) in the range of from 800 to 500,000 g/mol.

Inventive polymers are formed by linking at least two different alkoxylated (poly)alkylenimine units through at least one linkage (B), each linkage (B) being selected from organic spacers bearing in the range of from 4 to 30 carbon atoms. Preferably, inventive polymers contain an average in the range of from 3 to 15 alkoxylated (poly)alkylenimine units (A) per molecule. Said (poly)alkylenimine units are then linked through linkages (B). In embodiments wherein the number of (poly)alkylenimine units per polymer molecule is 4 or greater such molecules may be linear of star-like.

Examples of linkages (B) are diester linkages, diether linkages, triester linkages, for example based on trimellitic acid, diurethane linkages, and triurethane linkages, for example based on the cyanuric acid derivative of (4,4'-diisocanatophenyl)methane or of hexamethylenediisocyanate.

In a preferred embodiment of the present invention linkage (B) is selected from a diester spacer and a diurethane spacer. Such spacers may be incorporated easily and with high yield.

Examples of diester linkages are aliphatic dicarboxylic acid diester spacers, cycloaliphatic dicarboxylic acid diester spacers and aromatic diester dicarboxylic acid spacers, hereinafter also referred to as aliphatic diester spacers, cycloaliphatic diester spacers and aromatic diester spacers, respectively.

Preferably, linkage (B) is selected from a terephthalic acid diester linkage, an isophthalic acid diester linkage, an adipic acid diester linkage, a cyclohexandicarboxylic acid diester linkage, and a diurethane linkage based on toluylene diisocyanate, hexamethylene diisocyanate, and (4,4'-diisocyanatophenyl)methylene.

Cyclohexandicarboxylic acid diester linkages may be selected from *cis*-1,2-cyclohexandicarboxylic acid diester linkages, *trans*-1,2-cyclohexandicarboxylic acid diester linkages, cis-1,3-cyclohexandicarboxylic acid diester linkages, *trans*-1,3-cyclohexandicarboxylic acid diester linkages, *cis*-1,4-cyclohexandicarboxylic acid diester linkages, and *trans*-1,4-cyclohexandicarboxylic acid diester linkages, and combinations of at least two of the foregoing, with cis-1,4-cyclohexandicarboxylic acid diester linkages, trans-1,4-cyclohexandicarboxylic acid diester linkages and combinations of *cis*-1,4-cyclohexandicarboxylic acid diester linkages and *trans*-1,4-cyclohexandicarboxylic acid diester linkages being preferred.

In one embodiment of the present invention, inventive polymers have an average molecular weight $M_w$ in the range of from 2,500 to 1,500,000 g/mol, determined by GPC, preferably from 3,000 to 500,000 g/mol and more preferably from 5,000 to 500,000 g/mol.

In one embodiment of the present invention, the polydispersity $Q = M_w/M_n$ of inventive polymers is in the range of from 2 up to 20, preferably 3 to 8.

In embodiments wherein a chlorine-containing reactant such as an acid chloride or any other reactant - with at least one chlorine atom per molecule - is used, and in embodiments wherein a chlorine-containing catalyst - with at least one chlorine atom per molecule - is used for the linking reaction in making inventive polymers the residual chlorine content may be in the range of from 100 ppm by weight to 0.1 % by weight, referring to the inventive polymer.

In embodiments wherein neither chlorine-containing reactant such as an acid chloride or any other reactant - with at least one chlorine atom per molecule - nor a chlorine-containing catalyst - with at least one chlorine atom per molecule - is used for the linking reaction in making inventive polymers the residual chlorine content may be up to 10 ppm by weight, for example 1 to 8 ppm by weight, referring to the inventive polymer.

Inventive polymers have been found to be excellent demulsifyers, especially when applied to raw oil. When they are applied the step of demulsification does not take a lot of time, and a two-phase mixture is furnished that may be separated easily. A further aspect of the present invention therefore relates to the use of inventive polymers as demulsifyers, especially for crude oil. Another aspect of the present invention relates to a process for demulsifying crude oil by the use of at least one inventive polymer. It has further been found that inventive polymers are excellent dispersing agents, for example for pigments, and that they can be used as pigment dispersant in pigment preparations, for example for making ink-jet inks.

Another aspect of the present invention refers to a process for making inventive polymers, hereinafter also being referred to as inventive manufacturing process. The terms "making" and "manufacturing" are used interchangeably in the context of this invention.

The inventive manufacturing process comprises two steps,

(a) providing an alkoxylated (poly)alkylenimine (A),
(b) reacting said alkoxylated (poly)alkylenimine (A) with at least one compound bearing at least two functional groups per molecule that are reactive towards alkanol groups.

Alkoxylated (poly)alkylenimines are known per se, and some of them may be obtained commercially. If desired, they may be synthesized, for example according to a process comprising the following steps:

(a1) providing an amine or diamine and an initiator selected from $CO_2$, Brönsted acids and alkyl halides,
(a2) adding one or more $C_2$-$C_{10}$-alkyleneimines, for example ethylenimine or propylenimine under polymerization conditions,
(a3) reacting said one or more $C_2$-$C_{10}$-alkyleneimines,
(a4) alkoxylation of the polyalkylenimine obtained after step (a3) with one or more alkylene oxides, selected from ethylene oxide, 1,2-propylene oxide, butylene oxide, and mixtures of at least two of the foregoing.

Examples of amines useful in step (a1) are selected from aliphatic monoamines. Specific examples are methylamine, dimethylamine, ethylamine, diethylamine, 1-propylamine, 2-propylamine. Examples of diamines are aliphatic and cycloaliphatic and aromatic diamines such as 1,2-diaminoethane, 1,3-diaminopropane, 1,4-diaminobutane, 1,6-diaminohexane, 1,8-diaminooctane, 3,3-dimethylaminopropylamine, isophoronediamine, 4,4'-diaminodiphenylmethane, 1,4-bis(3-aminopropyl)piperazine, 4,9-dioxadodecane-1,12-diamine, 4,7,10-trioxatridecane-1,13-diamine, and certain oligomers of ethylendiamine such as diethylenetriamine and triethylenetetramine. Preference is given to methylamine, dimethylamine, ethylamine, diethylamine, propylamine, 1,2-diaminoethane, diethylenetriamine, triethylenetetramine or 3,3-dimethylaminopropylamine, especially 1,2-diaminoethane (other term: ethylenediamine).

Suitable initiators added in step (a1) are carbon dioxide, Brönsted acids such as, but not limited to sulphuric acid, methanesulfonic acid, and organic acids such as formic acid, acetic acid, benzoic acid, and furthermore alkyl halide such as, but not limited to butyl chloride, for example n-chlorbutane and tert.-butyl chloride, the term alkyl halides also encompassing aliphatic dihalides such as 1,2-dichloroethane.

In one embodiment, in steps (a1) and (a2) from zero up to 50 % by weight of water are used, referring to total aziridine, preferably up to 20% by weight.

In one embodiment, in steps (a1) and (a2) in the range of from 0.01 up to 10 % by weight, preferably 0.5 up to 5% by weight of amine or diamine, respectively, are used, referring to total aziridine.

In one embodiment, in steps (a1) and (a2) in total from 10 ppm up to 10 % by weight of $CO_2$, Brönsted acid or alkyl halide are used, referring to total aziridine, preferably 2 up to 8 % by weight.

In step (a2), one or more $C_2$-$C_{10}$-alkyleneimines, for example ethylenimine or propylenimine is added. Non-limiting examples of optionally added substituted aziridine are 1-(2-hydroxyethyl)aziridine and 1-(2-aminoethyl)aziridine.

The addition according to step (a2) and the reaction according to step (a3) is performed under polymerization conditions. Polymerization conditions refer to a temperature in the range of from 60 to 200°C, preferably 88 to 180°C. The pressure is preferably in the range of from 1 to 50 bar, preferably 2 to 10 bar.

Preferably during step (a2) and (a3) neither further initiator nor further amine(s) are being added. Water is not added, either. The residual humidity of $C_2$-$C_{10}$-alkyleneimine, if any, is not counted as water addition in the context of the present invention.

In one embodiment of the present invention, the duration of steps (a2) and (a3) is in the range of from 2 to 30 hours, preferably at least 5 hours. The residual monomer content is preferably 1 ppm or less after completion of (a2). The residual comonomer content may be determined with 4-(para-nitrobenzyl)pyridine, according to the Preussmann Test, see von Preussmann et al., Arzneimittelforschung 1969, 19, 1059. The time ratio (a2)/(a3) may be in the range of from 10:1 to 1:10.

In a preferred embodiment of the present invention, synthesis of polyalkylenimine is performed in a tubular reactor combined with a semi-continuously operated tank reactor.

In step (a4), the polyalkylenimine resulting from step (a3) with one or more alkylene oxides, selected from ethylene oxide, 1,2-propylene oxide, butylene oxide, and mixtures of at least two of the foregoing.

In step (a), such polyalkylenimine may be provided in bulk or in solution, in bulk being preferred.

Step (a4) of the inventive two-step process comprises reacting the polypropylenimine provided in step (a3) with at least one $C_2$-$C_4$-alkylene oxide, for example ethylene oxide, propylene oxide, butylene oxide, or mixtures of at least two alkylene oxides of the foregoing. Preference is given to ethylene oxide, 1,2-propylene oxide and mixtures of ethylene oxide and 1,2-propylene oxide. If mixtures of at least two alkylene oxides are applied, they can be reacted step-wise or simultaneously.

Step (a4) of the inventive two-step process is carried out in the presence of a base. Suitable bases such as potassium hydroxide, sodium hydroxide, sodium or potassium alkoxides such as potassium methylate ($KOCH_3$), potassium tert-butoxide, sodium ethoxide and sodium methylate ($NaOCH_3$), preferably from potassium hydroxide and sodium hydroxide. Further examples of catalysts are alkali metal hydrides and alkaline earth metal hydrides such as sodium hydride and calcium hydride, and alkali metal carbonates such as sodium carbonate and potassium carbonate. Preference is given to the alkali metal hydroxides and the alkali metal alkoxides, particular preference being given to potassium hydroxide and sodium hydroxide. Typical use amounts for the base are from 0.05 to 10% by weight, in particular from 0.5 to 2% by weight, based on the total amount of polyalkylenimine and $C_2$-$C_4$-alkylene oxide.

In one embodiment of the present invention, step (a4) of the inventive two-step process is carried out at temperatures in the range of from 90 to 240°C, preferably from 120 to 180°C, in a closed vessel.

In one embodiment of the present invention, step (a4) of the inventive two-step process is carried out at a pressure in the range of from 1 to 10 bar, preferably 1 to 8 bar.

In one embodiment of the present invention, $C_2$-$C_4$-alkylene oxide(s) is/are introduced to polyalkylenimine and optionally to the catalyst under the vapour pressure of the alkylene oxide or of the respective mixture of $C_2$-$C_4$-alkylene oxides at the selected reaction temperature. $C_2$-$C_4$-Alkylene oxide(s) can be introduced in pure form or, as an alternative, be diluted up to 30 to 60% by volume with an inert gas such as a rare gas or nitrogen. This measure affords additional safety against explosion-like polyaddition of the $C_2$-$C_4$-alkylene oxide.

In case several $C_2$-$C_4$-alkylene oxides are being introduced polyether chains will be formed in which the different alkylene oxide units are distributed virtually randomly. Variations in the distribution of the units along the polyether chain can arise due to differing reaction rates of $C_2$-$C_4$-alkylene oxides. Variations in the distribution of the units along the polyether chain can be achieved arbitrarily by continuously introducing an alkylene oxide mixture of program-controlled composition as well. In case different $C_2$-$C_4$-alkylene oxides are reacted subsequently, then polyether chains with a block-type distribution of the alkylene oxide units are obtained.

In a preferred embodiment of the present invention, step (a4) can consist of two or more sub-steps, of which the first sub-step consists in initially undertaking only an incipient alkoxylation of polyalkylenimine. In the incipient alkoxylation, polyalkylenimine is reacted with a portion of the total amount of $C_2$-$C_4$-alkylene oxide used that corresponds to 0.9 to 1 mole of alkylene oxide per mole of NH moiety. The incipient alkoxylation is generally undertaken in the absence of a catalyst, preferably in an aqueous solution.

In one embodiment of the present invention, the incipient alkoxylation can be performed at a reaction temperature from 70 to 200°C, preferably from 80 to 160°C.

In one embodiment of the present invention, the incipient alkoxylation may be affected at a pressure of up to 10 bar, preferably up to 8 bar.

In a second sub-step and - optionally, in subsequent sub-steps - the further alkoxylation is then effected by subsequent reaction with $C_2$-$C_4$-alkylene oxide(s). The further alkoxylation is typically undertaken in the presence of a catalyst.

The second sub-step - and the optional subsequent sub-steps - may each be undertaken in bulk, embodiment (i), or in an organic solvent, embodiment (ii). In embodiment (i), water can be removed from the aqueous solution of the incipiently alkoxylated polyethylenimine (A). Such water removal can be done by heating to a temperature in the range of from 80 to 150°C under a reduced pressure in the range of from 0.01 to 0.5 bar and distilling off the water.

In one embodiment of the present invention, the subsequent reaction with $C_2$-$C_4$-alkylene oxide(s) is effected typically at a reaction temperature in the range of from 70 to 200°C and preferably from 100 to 180°C.

In one embodiment of the present invention, the subsequent reaction with $C_2$-$C_4$-alkylene oxide(s) is effected typically at a pressure of up to 10 bar and in particular up to 8 bar.

In one embodiment of the present invention, the reaction time of the subsequent reaction with $C_2$-$C_4$-alkylene oxide(s) is generally in the range of from 0.5 to 12 hours.

Examples of suitable organic solvents for embodiment (ii) are nonpolar and polar aprotic organic solvents. Examples of particularly suitable nonpolar aprotic solvents include aliphatic and aromatic hydrocarbons such as hexane, cyclohexane, toluene and xylene. Examples of particularly suitable polar aprotic solvents are ethers, in particular cyclic ethers such as tetrahydrofuran and 1,4-dioxane, furthermore N,N-dialkylamides such as dimethylformamide and dimethylacetamide, and N-alkyllactams such as N-methylpyrrolidone. It is as well possible to use mixtures of at least two of the above organic solvents. Preferred organic solvents are xylene and toluene.

In embodiment (ii), the solution obtained in the first step, before or after addition of catalyst and solvent, is dewatered before being subjected to alkylene oxide, said water removal advantageously being done by removing the water at a temperature in the range of from 120 to 180°C, preferably supported by a stream of nitrogen. The subsequent reaction with the alkylene oxide may be effected as in embodiment (i). In embodiment (i), the alkoxylated polyethylenimines (B) according to the invention is obtained directly in bulk and may be dissolved in water, if desired. In embodiment (ii), organic solvent is typically replaced by water. Alkoxylated polyethylenimines (B) according to the invention may alternatively be isolated in bulk.

After step (a4) of the inventive two-step process alkoxylated polyalkylenimine (A) according to the invention is obtained.

In an analogous way, step (a4) may be performed with an $C_2$-$C_{10}$-alkylenimine as starting material, for example with 1,2-propylendiamine, preferably with an $\alpha,\omega$-$C_2$-$C_{10}$-alkylendiamine, for example 1,2-ethylendiamine, 1,3-propylendiamine, 1,4-butylendiamine, 1,5-pentylendiaminne, 1,6-hexandiamine (also being referred to as 1,6-hexylendiamine), 1,8-diamine or 1,10-decandiamine, even more preferred are 1,2-ethylendiamine, 1,3-propylendiamine, 1,4-butylendiamine, and 1,6-hexandiamine.

In step (b) of the inventive manufacturing process, alkoxylated (poly)alkylenimine (A) is reacted with at least one compound bearing at least two functional groups per molecule that are reactive towards alkanol groups.

In one embodiment of the present invention, alkanol groups in alkoxylated (poly)alkylenimine (a) and functional groups that are reactive towards alkanol groups in said compound are in a molar ratio in the range of from 4:1 to 1:5, preferably 3:1 to 1:3, and even more preferably 2:1 to 1:2.

Examples of functional groups that are reactive towards alkanol groups are carboxyl groups, carboxylic acid anhydride groups, carboxylic acid halide groups, especially carboxylic acid chloride groups, and carboxylic ester groups, for example $C_1$-$C_{10}$-alkyl ester groups such as nonyl ester groups and 2-ethylhexyl groups, especially the respective ethyl ester and the methyl ester groups. Further examples of functional groups that are reactive towards alkanol groups are isocyanate groups. Most preferred are carboxylic acid methyl ester groups.

Examples of preferred compounds that may be used for introducing linkage (B) are the dimethyl esters and the diethyl esters of terephthalic acid, of isophthalic acid, of adipic acid, and of cyclohexanedicarboxylic acid, and the following diisocyanates: toluylene diisocyanate, hexamethylene diisocyanate, and (4,4'-diisocyanatophenyl)methylene.

Cyclohexanedicarboxylic acid dimethyl and diethyl esters may be selected from the respective esters of *cis*-1,2-cyclohexanedicarboxylic acid, *trans-1,2-cyclohexanedicarboxylic* acid, *cis-1,3*-cyclohexanedicarboxylic acid, *trans*-1,3-cyclohexanedicarboxylic acid, *cis*-1,4-cyclohexanedicarboxylic acid, and *trans*-1,4-cyclohexanedicarboxylic acid, and combinations of at least two of the foregoing, with *cis*-1,4-cyclohexanedicarboxylic acid, *trans*-1,4-cyclohexanedicarboxylic acid and combinations of *cis*-1,4-cyclohexanedicarboxylic acid and *trans*-1,4-cyclohexanedicarboxylic acid being preferred.

In embodiments of step (b) wherein diester linkages are made, a catalyst may be applied, for example a Lewis acid. Examples of suitable Lewis acids are boron halides, for example, $BF_3$ etherate, aluminium trialkoxidessuch as, but not limited to $Al(OCH_3)_3$ and $Al[OCH(CH_3)_2]_3$, furthermore titanium tetraalkoxylates such as titanium tetraethoxylate and titanium tetraisopropoxide.

In a preferred embodiment of step (b) wherein diester linkages are made, a combination catalyst is applied, for example a combination of at least one of the above Lewis acids and an alkali metal salt of a carboxylic acid, for example a combination of a Lewis acid and sodium acetate of potassium acetate.

The amount of catalyst that is preferred is in the range of 0.01 to 10% by weight of catalyst, referrinf to the sum of alkoxylated (poly)ethyleninine and compound bearing at least two functional groups per molecule that are reactive towards alkanol groups.

In embodiments of step (b) wherein a diurethane linkage is made the use of a catalyst is preferred. Preferred catalysts are tertiary amines, for example triethanolamine, trimethylamine, triethylamine, 1,4-diaza-[2,2,2]-tricyclooctane, and methyldihydrogenated tallow amine, in particular triethanolamine.

Step (b) may be performed in the presence of a solvent. In embodiments of step (b) wherein a diurethane linkage is formed the use of a solvent is preferred. A particularly preferred example of suitable solvents is ethyl acetate. A range of suitable concentrations of isocyanate in solvent is 1:10 to 1:5.

In other embodiments of step (b), especially in embodiments in which a diester lingkage is made, no solvent is employed, and such steps (b) are performed in bulk.

Step (b) of the inventive manufacturing process may be performed under removal of byproducts, if applicable. For example, in embodiments wherein a carboxylic acid dichloride is employed, the HCl formed is advantageously removed in the presence of a base, for example an amine or sodium hydroxide. Methanol or ethanol formed in embodiments wherein carboxylic acid dimethyl or diethyl ester are used may be removed by distillation, for example with a Dean-Stark trap.

In one embodiment of the present invention, step (b) of the inventive manufacturing process is performed at a temperature in the range of from 20 to 200°C. In embodiments of step (b) in which a diester linkage is formed a temperature in the range of from 120 to 180°C is preferred. In embodiments of step (b) in which a diurethane linkage is formed a temperature in the range of from 20 to 140°C is preferred.

In one embodiment of the present invention, step (b) of the inventive manufacturing process is performed at a pressure in the range of from 3 mbar to 3 bar. Especially in embodiments of step (b) in which a diester linkage is formed a pressure below normal pressure is preferred in order to facilitate removal of alcohol. Formation of a diurethane linkage is preferably performed at normal pressure.

In one embodiment of the present invention, step (b) of the inventive manufacturing process is performed over a period of time in the range of from 30 minutes to 6 hours, preferably from 1 to 3 hours.

Polymers obtained according to the inventive manufacturing process are excellently suitable as demulsifyers, especially for crude oil, and as pigment dispersant, especially in ink-jet inks. Another aspect of the present invention is thus the use of inventive polymers as demulsifyer, especially for the demulsification of crude oil, especially the demulsification of water-in-oil emulsions based on crude oil. Another aspect of the present invention is a process for demulsification of crude oil, especially of water-in-oil emulsions based on crude oil, by applying at least one inventive polymer. Another aspect of the present invention is a process for dispersing pigments and of making a pigment dispersion, especially for the use of an ink-jet ink, by using at least one inventive polymer. Another aspect of the present invention is the use of inventive polymers for the manufacture of leather, especially for retanning. Another aspect of the present invention is a process for making leather by the use of at least one inventive polymers in the retanning step, said process also being refere to as inventive retanning process. Leather made by use of an inventive polymer are very soft and exhibit a good levelness, that is even distribution of dye(s).

For carrying out the retanning process according to the invention, semifinished products tanned conventionally, i.e. for example with chrome tanning agents, mineral tanning agents, polymer tanning agents, aldehydes, syntans or resin tanning agents may be used as starting materials. For carrying out the retanning process according to the invention, at least one polymer according to the invention is allowed to act on semifinished products, i.e. treatment with at least one polymer according to the invention is effected.

The retanning process according to the invention can be carried out under otherwise customary conditions. Expediently, one or more, i.e. from 2 to 6, treatment steps are chosen and washing with water can be effected between the treatment steps. The temperature at the individual treatment steps is in each case from 5 to 60°C, preferably from 20 to 45°C. Expediently, one or more further compositions usually used during the retanning are employed, for example fatliquors, polymer tanning agents and acrylate- and/or methacrylate-based fatliquoring agents, retanning agents based on vegetable tanning agents, fillers, leather dyes or emulsifiers.

A duration of from 10 minutes to 12 hours has proven useful for the retanning process according to the invention, and from one to three hours are preferred. The retanning process according to the invention can be carried out in any desired vessels customary in tanning, for example by drumming in barrels or in rotated drums.

In one embodiment of the retanning process according to the invention, altogether from 0.01 to 10% by weight of polymer according to the invention, based on the shaved weight on the other hand, are used, and from 0.5 to 5% by weight are preferred.

The present invention is further illustrated by the following working examples.

Working examples

General remarks:

Percentages refer to % by weight unless specifically defined otherwise.

I. Manufacture of polyethylenimines
I.1 Synthesis by polymerization

General remarks: the syntheses were performed in a continuously operated tubular reactor, length 18 m, inner diameter 3.5 mm. Said tubular reactor had two reaction zones. In the first reaction zone the temperature was kept at 125 to 130°C, in the second at 150°C. The first reaction zone was in the first 12 m, the second reaction zone in the remaining 6 m of the tubular reactor. The pressure was kept at 0.5 bar above the pressure necessary to keep the reaction mixture liquid, which requires a minimum of 1.5 bar.
Step (a1) was performed in a so-called mixing chamber, in which water, ethylenimine, aqueous $CO_2$ solution, and ethylendiamine were mixed through three static mixers. The mixture so obtained was then transferred into the tubular reactor.

The following starting materials were used:

Aziridine, provided as 25 wt-% aqueous solution
$CO_2$ as 2.5 wt% aqueous solution

1,2-ethylendiamine

I.1.1 Synthesis of polyethylenimine (PEI.1)

A 2-litre reactor with plate heat exchanger, was charged with 88 g 1,2-ethylendiamine and 27 g $CO_2$ (as dry ice). A 60% by weight aqueous solution of aziridine was fed at a rate of 270 g/h. Through exothermic primary polymerization the temperature rose to 140°C. The temperature was maintained at 140°C. In total, an amount of 980 g of the aziridine solution were added. After the addition had been completed the reaction mixture was stirred for another two hours at 145°C.

Then the reaction was stopped by cooling to ambient temperature and pressure release. The water was removed, and polyethylenimine (PEI.1) was obtained.

I.1.2 Synthesis of polyethylenimine (PEI.2)

A premix was provided from $CO_2$ as 2.5 wt% aqueous solution and 1,2-ethylendiamine. The tubular reactor described above was fed with a 360 g/h 25 wt-% aqueous solution of aziridine and the above premix in a way that a feed resulted in the addition of 17 g/h 2.5 wt% aqueous solution of $CO_2$ and 6.2 g/h 1,2-ethylendiamine were introduced into the tubular reactor. The feed had a temperature of 5°C at the time of mixing. Through exothermic primary polymerization the temperature rose to 80 to 160°C when entering the first reaction zone. At the end of the tubular reactor, the pressure was adjusted to 5 bar. The conversion of aziridine in the tubular reactor was 99 mol-%.

After having passed the tubular reactor, the reaction mixture was transferred into a semi-continuously operated tank reactor operated at 160°C. There, the polymerization was completed, step (a3). The average residence time was 2.5 hours in the stirred tank reactor hours. When the tank reactor was full the reaction was stopped by cooling to ambient temperature and pressure release. The water was removed, and polyethylenimine (PEI.2) was obtained.

I.1.3 Synthesis of polyethylenimine (PEI.3)

A 2-litre reactor with plate heat exchanger, was charged with 41.8 g 1,2-ethylendiamine and 14.2 g $CO_2$ (as dry ice). A 60% by weight aqueous solution of aziridine was fed at a rate of 250 g/h. Through exothermic primary polymerization the temperature rose to 140°C. The temperature was maintained at 140°C. In total, an amount of 1 kg of the aziridine solution were added. After the addition had been completed the reaction mixture was stirred for another two hours at 145°C.

Then the reaction was stopped by cooling to ambient temperature and pressure release. The water was removed, and polyethylenimine (PEI.3) was obtained.

The polyethylenimines (PEI) provided are summarized in Table 1.

Table 1: Polyethylenimines and their properties

|  | $M_w$ [g/mol] | $M_n$ [g/mol] | $M_w/M_n$ | Amine value |
|---|---|---|---|---|
| (PEI.1) | 880 | 620 | 1.42 | 20.5 |
| (PEI.2) | 28,000 | 6,800 | 4.1 | 15.3 |
| (PEI.3) | 2,000 | 1,150 | 1.74 | 17.3 |

All molecular weights were determined by GPC with 1.5 % by weight aqueous formic acid as eluent and cross-linked poly-hydroxyethylmethacrylate as stationary phase. Internal standard was a 0.05 %by weight solution of tert.-butanol in 1.5% by weight aqueous formic acid. The column was calibrated with the aide of pullulan ($\alpha$-1,4-;$\alpha$-1,6-glucan) samples with known molecular weight. In Table 1, the amine value is the primary amine value.

II. Syntheses of alkoxylated polyethylenimines (A)
II.1 Synthesis of "mono-alkoxylates"
II.1.1 Synthesis of mono-ethoxylate 1

A 2-I autoclave was charged with 645 g of polyethylenimine (PEI.1) and 32 g of water and then purged with nitrogen. Then, the autoclave was heated to 90°C. An amount of 595 g of ethylene oxide was added within 10 hours under stirring and allowed to react for additional 12 hours at 90°C. The mixture so obtained was cooled to 80°C, and the volatile ingredients were removed *in vacuo.* An amount of 1,235 g of a highly viscous yellow liquid, "mono-ethoxylate 1" was obtained.

II.1.2 Synthesis of mono-propoxylate 2

A 2-l autoclave was charged with 323 g of polyethylenimine (PEI.1) and 16 g of water and then purged with nitrogen. Then, the autoclave was heated to 90°C. An amount of 384 g of propylene oxide was added within 10 hours under stirring and allowed to react for additional 12 hours at 90°C. The mixture so obtained was cooled to 80°C, and the volatile ingredients were removed *in vacuo.* An amount of 692 g of a highly viscous yellow liquid, "mono-propoxylate 2" was obtained.

II.1.3 Synthesis of mono-ethoxylate 3

A 2-l autoclave was charged with 445 g of hexamethylenediamine ("HMDA") and 62 g of water and then purged with nitrogen. Then, the autoclave was heated to 90°C. An amount of 240 g of ethylene oxide was added within 10 hours under stirring and allowed to react for additional 12 hours at 90°C. The mixture so obtained was cooled to 80°C, and the volatile ingredients were removed *in vacuo.* An amount of 677 g of a highly viscous yellow liquid, "mono-ethoxylate 3" was obtained.

II.1.4 Synthesis of mono-ethoxylate 4

A 2-l autoclave was charged with 520 g of polyethylenimine (PEI.2) and 15.5 g of water and then purged with nitrogen. Then, the autoclave was heated to 90°C. An amount of 350 g of ethylene oxide was added within 10 hours under stirring and allowed to react for additional 12 hours at 90°C. The mixture so obtained was cooled to 80°C, and the volatile ingredients were removed *in vacuo.* An amount of 859 g of a highly viscous yellow liquid, "mono-ethoxylate 4" was obtained.

II.1.5 Synthesis of mono-ethoxylate 5

A 2-l autoclave was charged with 340 g of polyethylenimine (PEI.3) and 15.5 g of water and then purged with nitrogen. Then, the autoclave was heated to 90°C. An amount of 257 g of ethylene oxide was added within 10 hours under stirring and allowed to react for additional 12 hours at 90°C. The mixture so obtained was cooled to 80°C, and the volatile ingredients were removed *in vacuo.* An amount of 601 g of a highly viscous yellow liquid, "mono-ethoxylate 5" was obtained.

II.1.6 Synthesis of mono-propoxylate 6

A 2-l autoclave was charged with 280 g of polyethylenimine (PEI.3) and 12 g of water and then purged with nitrogen. Then, the autoclave was heated to 90°C. An amount of 278 g of propylene oxide was added within 10 hours under stirring and allowed to react for additional 12 hours at 90°C. The mixture so obtained was cooled to 80°C, and the volatile ingredients were removed *in vacuo.* An amount of 551 g of a highly viscous yellow liquid, "mono-propoxylate 6" was obtained.

II.1.7 Synthesis of mon-propoxylate 7

A 2-l autoclave was charged with 365 g of hexamethylenediamine and 52 g of water and then purged with nitrogen. Then, the autoclave was heated to 90°C. An amount of 260 g of propylene oxide was added within 10 hours under stirring and allowed to react for additional 12 hours at 90°C. The mixture so obtained was cooled to 80°C, and the volatile ingredients were removed *in vacuo.* An amount of 626 g of a highly viscous yellow liquid, "mono-propoxylate 7" was obtained.

II.2 Alkoxylations

II.2.1 Synthesis of alkoxylated polyethylenimine (A.1)

A 2-l autoclave was charged with 330 g of mono-ethoxylate 1 and 5.6 g of a 50% by weight aqueous KOH solution. The water was removed at 20 mbar. Then, the autoclave was purged with nitrogen and subsequently heated to 120°C. Within 12 hours, 780 g of ethylene oxide were added under stirring and allowed to react for additional 12 hours at 120°C. The mixture so obtained was cooled to 80°C, and the volatile ingredients were removed *in vacuo.* An amount of 1,106 g of a light brown solid was obtained that was alkoxylated polyethylenimine (A.1).

II.2.2 Synthesis of alkoxylated polyethylenimine (A.2)

A 2-l autoclave was charged with 105 g of mono-ethoxylate 1 and 2.0 g of a 50% by weight aqueous KOH solution. The water was removed at 20 mbar. Then, the autoclave was purged with nitrogen and subsequently heated to 120°C. Within 12 hours, 998 g of ethylene oxide were added under stirring and allowed to react for additional 12 hours at 120°C. The mixture so obtained was cooled to 80°C, and the volatile ingredients were removed *in vacuo.* An amount of 1,100 g of a light brown solid was obtained that was alkoxylated polyethylenimine (A.2).

II.2.3 Synthesis of alkoxylated polyethylenimine (A.3)

A 2-l autoclave was charged with 152 g of mono-propoxylate 2 and 2.8 g of a 50% by weight aqueous KOH solution. The water was removed at 20 mbar. Then, the autoclave was purged with nitrogen and subsequently heated to 120°C. Within 12 hours, 963 g of propylene oxide were added under stirring and allowed to react for additional 12 hours at 120°C. The mixture so obtained was cooled to 80°C, and the volatile ingredients were removed in vacuo. An amount of 1,085 g of a light brown liquid was obtained that was alkoxylated polyethylenimine (A.3).

II.2.4 Synthesis of alkoxylated polyethylenimine (A.4)

A 2-l autoclave was charged with 124 g of mono-ethoxylate 1 and 2.7 g of a 50% by weight aqueous KOH solution. The water was removed at 20 mbar. Then, the autoclave was purged with nitrogen and subsequently heated to 120°C. Within 12 hours, 530 g of ethylene oxide were added under stirring and allowed to react for additional 12 hours at 120°C. Then, 618 g of propylene oxide were added under stirring within 12 hours and allowed to react for additional 12 hours at 120°C. The mixture so obtained was cooled to 80°C, and the volatile ingredients were removed *in vacuo.* An amount of 1,265 g of a yellow liquid was obtained that was alkoxylated polyethylenimine (A.4).

II.2.5 Synthesis of alkoxylated polyethylenimine (A.5)

A 2-l autoclave was charged with 76 g mono-ethoxylate 1 and 2.0 g of a 50% by weight aqueous KOH solution. The water was removed at 20 mbar. Then, the autoclave was purged with nitrogen and subsequently heated to 120°C. Within 12 hours, 605 g of ethylene oxide were added under stirring and allowed to react for additional 12 hours at 120°C. Then, 565 g of propylene oxide were added under stirring within 12 hours and allowed to react for additional 12 hours at 120°C. The mixture so obtained was cooled to 80°C, and the volatile ingredients were removed *in vacuo.* An amount of 1,244 g of a yellow liquid was obtained that was alkoxylated polyethylenimine (A.5).

II.2.6 Synthesis of alkoxylated polyethylenimine (A.6)

A 2-l autoclave was charged with 321 g of mono-ethoxylate 5 and 5.6 g of a 50% by weight aqueous KOH solution. The water was removed at 20 mbar. Then, the autoclave was purged with nitrogen and subsequently heated to 120°C. Within 12 hours, 830 g of ethylene oxide were added under stirring and allowed to react for additional 12 hours at 120°C. The mixture so obtained was cooled to 80°C, and the volatile ingredients were removed *in vacuo.* An amount of 1,148 g of a light brown solid was obtained that was alkoxylated polyethylenimine (A.6).

II.2.7 Synthesis of alkoxylated polyethylenimine (A.7)

A 2-l autoclave was charged with 155 g of mono-ethoxylate 5 and 2.6 g of a 50% by weight aqueous KOH solution. The water was removed at 20 mbar. Then, the autoclave was purged with nitrogen and subsequently heated to 120°C. Within 12 hours, 1,411 g of ethylene oxide were added under stirring and allowed to react for additional 12 hours at 120°C. The mixture so obtained was cooled to 80°C, and the volatile ingredients were removed *in vacuo.* An amount of 1,565 g of a light brown solid was obtained that was alkoxylated polyethylenimine (A.7).

II.2.8 Synthesis of alkoxylated polyethylenimine (A.8)

A 2-l autoclave was charged with 175 g of mono-propoxylate 6 and 2.9 g of a 50% by weight aqueous KOH solution. The water was removed at 20 mbar. Then, the autoclave was purged with nitrogen and subsequently heated to 120°C. Within 12 hours, 1,338 g of propylene oxide were added under stirring and allowed to react for additional 12 hours at 120°C. The mixture so obtained was cooled to 80°C, and the volatile ingredients were removed *in vacuo.* An amount of 1,512 g of a light brown solid was obtained that was alkoxylated polyethylenimine (A.8).

II.2.9 Synthesis of alkoxylated hexamethylenediamine (A.9)

A 2-I autoclave was charged with 210 g of mono-ethoxylate 3 and 4.2 g of a 50% by weight aqueous KOH solution. The water was removed at 20 mbar. Then, the autoclave was purged with nitrogen and subsequently heated to 120°C. Within 12 hours, 828 g of ethylene oxide were added under stirring and allowed to react for additional 12 hours at 120°C. The mixture so obtained was cooled to 80°C, and the volatile ingredients were removed *in vacuo.* An amount of 1,032 g of a light brown solid was obtained that was alkoxylated hexamethylenediamine (A.9).

11.2.10 Synthesis of alkoxylated hexamethylenediamine (A.10)

A 2-I autoclave was charged with 140 g of mono-ethoxylate 3 and 3.4 g of a 50% by weight aqueous KOH solution. The water was removed at 20 mbar. Then, the autoclave was purged with nitrogen and subsequently heated to 120°C. Within 12 hours, 1,154 g of ethylene oxide were added under stirring and allowed to react for additional 12 hours at 120°C. The mixture so obtained was cooled to 80°C, and the volatile ingredients were removed *in vacuo.* An amount of 1,292 g of a light brown solid was obtained that was alkoxylated hexamethylenediamine (A.10).

II.2.11 Synthesis of alkoxylated hexamethylenediamine (A.11)

A 2-I autoclave was charged with 140 g of mono-propoxylate 7 and 3.2 g of a 50% by weight aqueous KOH solution. The water was removed at 20 mbar. Then, the autoclave was purged with nitrogen and subsequently heated to 120°C. Within 12 hours, 874 g of propylene oxide were added under stirring and allowed to react for additional 12 hours at 120°C. The mixture so obtained was cooled to 80°C, and the volatile ingredients were removed *in vacuo.* An amount of 1,013 g of a light brown solid was obtained that was alkoxylated hexamethylenediamine (A.11).

II.2.12 Synthesis of alkoxylated polyethylenimine (A.12)

A 2-I autoclave was charged with 102 g mono-ethoxylate 4 and 2.4 g of a 50% by weight aqueous KOH solution. The water was removed at 20 mbar. Then, the autoclave was purged with nitrogen and subsequently heated to 120°C. Within 12 hours, 706 g of ethylene oxide were added under stirring and allowed to react for additional 12 hours at 120°C. Then, 640 g of propylene oxide were added under stirring within 12 hours and allowed to react for additional 12 hours at 120°C. The mixture so obtained was cooled to 80°C, and the volatile ingredients were removed *in vacuo.* An amount of 1,441 g of a yellow liquid was obtained that was alkoxylated polyethylenimine (A.5).

Table 2

| Entry | Amine | AO | moles AO/N-H | $M_n$ (A) [g/mol] |
|---|---|---|---|---|
| (A.1) | PEI.1 | EO | 6 | 3,300 |
| (A.2) | PEI.1 | EO | 20 | 12,700 |
| (A.3) | PEI.1 | PO | 12 | 10,600 |
| (A.4) | PEI.1 | EO, PO | 10, 8 | 12,400 |
| (A.5) | PEI.1 | EO, PO | 18, 12 | 20,100 |
| (A.6) | PEI.3 | EO | 7 | 7,700 |
| (A.7) | PEI.3 | EO | 22 | 24,200 |
| (A.8) | PEI.3 | PO | 16 | 18,050 |
| (A.9) | HMDA | EO | 12 | 880 |
| (A.10) | HMDA | EO | 24 | 1,620 |
| (A.11) | HMDA | PO | 16 | 1,530 |
| (A.12) | PEI.2 | EO, PO | 18, 12 | 141,500 |

Explanations with respect to Table 2:
AO: alkylene oxide, EO: ethylene oxide, PO: propylene oxide, HMDA: hexamethylenediamine

III. Linking reactions

III.1 General procedure of formation of diester linkage formation

A four-necked 1-litre flask with stirrer, thermometer and condenser for distillation was charged with 250 g of (A) according to table 3 and heated to 120°C. Then, 200 mg of anhydrous sodium acetate and terephthalic acid dimethyl ester according to table 3 were added. The temperature was increased to 140°C, and 100 mg of $Ti(O\text{-}isoC_3H_7)_4$ were added. The resultant mixture was stirred at 170°C for 4 hours, and methanol was distilled off. Inventive materials according to Table 3 were obtained.

III.2 General procedure for urethane linking

A four-necked 1-litre flask with stirrer, thermometer and condenser for distillation was charged with 200 g of (A) according to table 3 and heated to 30°C. 50 g of ethyl acetate and 2.0 g of triethanolamine were added under stirring. Then a 50% solution of toluenediisocyanate (TDI) or hexamethylenediisocyanate (HDI) according to Table 3 were added dropwise within 30 minutes (stirring). The temperature was increased to 140°C within 45 minutes and the mixture was stirred at for another 3 hours while ethyl acetate was distilled off. Then, 100 ml water were added at 90°C, the reaction mixture was stirred for 15 minutes and finally, volatile ingredients were removed in a rotavap at 60°C and 10 mbar.

Table 3 crosslinking reactions and properties of inventive polymers

| (C) | (B) | (A) | molar ratio (B)/(A) | average number of units |
|---|---|---|---|---|
| (C.1) | DMT | (A.1) | 0.9 | 4.6 |
| (C.2) | DMT | (A.2) | 0.7 | 3.9 |
| (C.3) | DMT | (A.3) | 0.9 | 3.8 |
| (C.4) | DMT | (A.4) | 0.6 | 3.3 |
| (C.5) | DMT | (A.4) | 1.1 | 6.1 |
| (C.6) | DMT | (A.5) | 0.7 | 3.0 |
| (C.7) | DMT | (A.5) | 1.0 | 5.7 |
| (C.8) | DMT | (A.12) | 0.55 | 2.9 |
| (C.9) | DMT | (A.6) | 0.8 | 4.5 |
| (C.10) | DMT | (A.7) | 0.6 | 3.8 |
| (C.11) | DMT | (A.8) | 1.0 | 4.1 |
| (C.12) | DMT | (A.9) | 1.3 | 6.7 |
| (C.13) | DMT | (A.10) | 1.2 | 7.8 |
| (C.14) | DMT | (A.11) | 1.6 | 8.3 |
| (C.15) | HADME | (A.1) | 0.95 | 3.45 |
| (C.16) | HADME | (A.2) | 1.05 | 4.8 |
| (C.17) | HADME | (A.3) | 1.1 | 5.6 |
| (C.18) | TDI | (A.3) | 1.75 | 7.1 |
| (C.19) | TDI | (A.4) | 1.6 | 6.0 |
| (C.20) | HMDI | (A.4) | 1.8 | 5.3 |
| (C.21) | HMDI | (A.5) | 1.5 | 4.0 |
| (C.22) | HMDI | (A.5) | 1.95 | 8.7 |
| (C.23) | TDI | (A.12) | 0.95 | 3.0 |
| (C.24) | TDI | (A.6) | 0.9 | 3.3 |
| (C.25) | TDI | (A.6) | 1.6 | 4.8 |

(continued)

| (C) | (B) | (A) | molar ratio (B)/(A) | average number of units |
|---|---|---|---|---|
| (C.26) | TDI | (A.6) | 1.9 | 8.9 |
| (C.27) | TDI | (A.9) | 1.75 | 6.7 |
| (C.28) | TDI | (A.10) | 1.75 | 5.6 |
| (C.29) | TDI | (A.11) | 1.95 | 7.3 |
| Abbreviations: HADME: 1,4-cyclohexandicarboxylic acid dimethyl ester, mixture of cis- and trans-isomers, DMT: terephthalic acid dimethyl ester<br>Average number of units: number of (A) units per molecule of inventive polymer (C) | | | | |

IV. Tests as demulgators

In a 2-liter vessel, 35 ppm (mass) of inventive polymer (C) according to Table 4 were dissolved in the 10-fold amount of toluene and then mixed with 1 liter of crude oil/water emulsion (oil in water) under vigorous stirring, conditions: anchor stirrer, 1200 rpm, for 5 minutes at 40°C. The crude oil/water emulsion stemmed from North Africa (samples II, III) or Western Africa (sample (I), see Table 4. Then, three 100 ml-aliquots of the respective emulsion were transferred into 3 graduated cylinders and allowed to settle. The kinetics were determined by measuring the volume of the aqueous phase after 3, 5, 8, 15 und 30 minutes. The results are summarized in Table 4. As comparisons, the tests were repeated without the addition of any inventive polymer (C) and with 35 ppm (mass) non-cross-linked alkoxylated (poly)alkylenimines (A).

Table 4: kinetics of crude oil/water emulsion (oil in water) separation

| (C) | (A) | emulsion | 3 min [ml] | 5 min [ml] | 8 min [ml] | 15 min [ml] | 30 min [ml] |
|---|---|---|---|---|---|---|---|
| - | | I | - | - | 1.5 | 2 | 4 |
| - | (A.3) | I | - | 3 | 8 | 11 | 17 |
| (C.3) | - | I | 2 | 6 | 12.5 | 17 | 32 |
| (C.17) | - | I | 2.5 | 6.5 | 12.5 | 18 | 30 |
| (C.18) | - | I | 4 | 7.5 | 16.5 | 21 | 35 |
| - | (A.8) | I | - | 3 | 7.5 | 12 | 16 |
| (C.11) | - | I | 2.5 | 6 | 11 | 17 | 27.5 |
| - | (A.11) | I | - | 2 | 5.5 | 10.5 | 15 |
| (C.14) | - | I | 3.5 | 7 | 12 | 20.5 | 27 |
| - | (A.12) | I | - | 1 | 4 | 10.5 | 14 |
| (C.23) | - | I | | 2 | 7.5 | 14 | 23 |
| - | - | II | - | 1 | 4 | 8 | 14 |
| - | (A.3) | II | 2 | 4 | 10 | 13 | 20 |
| (C.3) | - | II | 4 | 10.5 | 15 | 25 | 40 |
| (C.17) | - | II | 3.5 | 10 | 15.5 | 27 | 40 |
| (C.18) | - | II | 6 | 15 | 25 | 40 | 47 |
| - | (A.11) | II | 2 | 5 | 9 | 13.5 | 19 |
| (C.14) | - | II | 5 | 16 | 21.5 | 33 | 45.5 |
| - | - | III | - | - | 4 | 7.5 | 13 |
| - | (A.3) | III | 2 | 4 | 8 | 16 | 21 |
| (C.3) | - | III | 3 | 7.5 | 15 | 22 | 32 |

(continued)

| (C) | (A) | emulsion | 3 min [ml] | 5 min [ml] | 8 min [ml] | 15 min [ml] | 30 min [ml] |
|---|---|---|---|---|---|---|---|
| (C.17) | - | III | 3 | 8 | 17 | 28 | 43 |
| (C.18) | - | III | 4 | 8.5 | 21 | 30 | 44 |
| - | (A.11) | III | 2 | 6.5 | 12.5 | 22 | 25.5 |
| (C.14) | - | III | 5 | 10 | 16 | 27 | 38.5 |
| Emulsion: refers to the crude oil/water emulsion tested | | | | | | | |

The ml in the 4th and following columns refer to the volume of the aqueous phase separated.

**Claims**

1. Polymer bearing the following structural elements per molecule:

   (A) an average of at least two alkoxylated (poly)alkylenimine units, said alkylene being selected from $C_2$-$C_{10}$-alkylene and said alkoxylation being selected from ethoxylation, propoxylation, butoxylation and combinations of at least two of the foregoing,
   (B) at least one linkage connecting at least two different alkoxylated (poly)alkylenimine units (A), each linkage (B) being selected from organic spacers bearing in the range of from 4 to 30 carbon atoms.

2. Polymer according to claim 1 wherein such alkoxylated (poly)alkylenimine (A) is selected from poly-ethoxylated polyethylenimine, ethoxylated polypropylenimine, ethoxylated polyhexanamines, ethoxylated and propoxylated polyethylenimine, ethoxylated and propoxylated polypropylenimine, and ethoxylated and poly-propoxylated $\alpha,\omega$-hexandiamines.

3. Polymer according to any of the preceding claims having an average molecular weight $M_w$ in the range of from 2,500 to 1,500,000 g/mol.

4. Polymer according to any of the preceding claims wherein linkage (B) is selected from a diester spacer and a diurethane spacer.

5. Polymer according to any of the preceding claims wherein the polydispersity Q of polyalkoxylated (poly)alkylenimine (A) is in the range of from 2 to 15.

6. Polymer according to any of the preceding claims wherein linkage (B) is selected from a terephthalic acid diester linkage, an isophthalic acid diester linkage, an adipic acid diester linkage, a cyclohexandicarboxylic acid diester linkage, and a diurethane linkage based on toluylene diisocyanate, hexamethylene diisocyanate, and (4,4'-diisocyanatophenyl)methylene.

7. Polymer according to any of the preceding claims wherein an alkoxylated polyalkylenimine unit (A) bears at least 6 nitrogen atoms per unit.

8. Polymer according to any of the preceding claims containing an average in the range of from 3 to 15 alkoxylated (poly)alkylenimine units (A) per molecule.

9. Process for making a polymer according to any of the preceding claims, said process comprising the steps of

   (a) providing an alkoxylated (poly)alkylenimine (A),
   (b) reacting said alkoxylated (poly)alkylenimine (A) with at least one compound bearing at least two functional groups per molecule that are reactive towards alkanol groups.

10. Process according to claim 9 wherein said compound bearing at least two functional groups per molecule is selected from terephthalic acid dimethyl ester, terephthalic acid diethyl ester, isophthalic acid dimethyl ester, isophthalic acid diethyl ester, cyclohexandicarboxylic acid dimethyl ester, cyclohexandicarboxylic acid diethyl ester, toluylene diisocyanate, hexamethylene diisocyanate, and 4,4'-methylenebis(phenyl isocyanate).

11. Process according to any of claims 9 or 10 wherein said reaction is performed in the presence of a catalyst.

12. Use of a polymer according to any of claims 1 to 8 for the demulsification of crude oil.

13. Use of a polymer according to any of claims 1 to 8 for dispersing pigments.

14. Use of a polymer according to any of claims 1 to 8 as ingredient in ink-jet inks.

15. Use of a polymer according to any of claims 1 to 8 for the manufacture of leather.

Europäisches
Patentamt

European
Patent Office

Office européen
des brevets

**EUROPEAN SEARCH REPORT**

Application Number

EP 15 17 7066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 705 834 A (BAUR RICHARD [DE] ET AL) 10 November 1987 (1987-11-10) * column 4, line 54 - column 5, line 16 * * column 6, line 17 - line 23 * * column 6, line 13 - line 15 * * column 4, line 3 - line 45 * * column 2, line 37 - line 46; claim 4 * ----- | 1-10, 12-15 | INV. C08G73/02 C10G33/04 |
| X A | JP 2003 049146 A (NIPPON CATALYTIC CHEM IND) 21 February 2003 (2003-02-21) * page 4, paragraph [0036] - paragraph [0037] * * page 4, paragraph [0043] - page 5, paragraph [0044] * ----- | 1-11 12-15 | |

|  |  |
|---|---|
| | TECHNICAL FIELDS SEARCHED (IPC) |
| | C08G C10G |

The present search report has been drawn up for all claims

| Place of search | Date of completion of the search | Examiner |
|---|---|---|
| Munich | 23 October 2015 | Wohnhaas, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 17 7066

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2015

| Patent document cited in search report | | Publication date | Patent family member(s) | | Publication date |
|---|---|---|---|---|---|
| US 4705834 | A | 10-11-1987 | DE | 3347257 A1 | 11-07-1985 |
| | | | EP | 0147743 A2 | 10-07-1985 |
| | | | NO | 845254 A | 01-07-1985 |
| | | | US | 4705834 A | 10-11-1987 |
| JP 2003049146 | A | 21-02-2003 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4935162 A
- US 5445765 A

**Non-patent literature cited in the description**

- **PREUSSMANN et al.** *Arzneimittelforschung,* 1969, vol. 19, 1059